# EUROPEAN PATENT APPLICATION

(11) **EP 4 648 172 A1**
(43) Date of publication of application: **12.11.2025**
(21) Application number: 24832389.1
(22) Date of filing: 24.06.2024
(51) Int. Cl.: H01M 10/42, H01M 10/613

(54) **CELL TEST JIG**

(30) Priority: 26.06.2023 KR 20230081849; 20.06.2024 KR 20240080555
(71) Applicant: LG Energy Solution, Ltd., Seoul 07335 (KR)
(72) Inventor: HAN, Jeong Hee, Daejeon 34122 (KR); KIM, Young Soon, Daejeon 34122 (KR)
(74) Representative: Goddar, Heinz J.
(86) International application number: PCT/KR2024/008737
(87) International publication number: WO 2025/005611

(57) **Abstract**

The present invention relates to a cell test jig, and more particularly, to a cell test jig, which is capable of simulating an environment that is identical or similar to that in a battery module or a battery pack, so that even when testing one cell, results that are identical or similar to those obtained by testing the battery module or the battery pack may be obtained.

A cell test jig used for testing a cell according to the present invention includes a first plate configured to cover one surface of the cell, a second plate configured to cover the other surface that is a surface opposite to the one surface of the cell, a heating pad disposed between the first plate and the second plate and disposed adjacent to one side surface of the cell, which is configured to connect the one surface and the other surface of the cell to each other, and a cooling plate disposed between the first plate and the second plate and disposed adjacent to the other side surface of the cell, which is a surface opposite to the one side surface of the cell.

## Description

### TECHNICAL FIELD

### CROSS-REFERENCE TO RELATED APPLICATION

The present application claims the benefit of the priority of Korean Patent Application Nos. 10-2023-0081849, filed on June 26, 2023, and 10-2024-0080555, filed on June 20, 2024, which are hereby incorporated by reference in their entirety.

### TECHNICAL FIELD

The present invention relates to a cell test jig, and more particularly, to a cell test jig, which is capable of simulating an environment that is identical or similar to that in a battery module or a battery pack, so that even when testing one cell, results that are identical or similar to those obtained by testing the battery module or the battery pack may be obtained.

### BACKGROUND ART

Recently, due to changes in awareness of environmental issues, demand for electric vehicles (EVs) that are powered by Li-ion secondary batteries rather than internal combustion engines is increasing. As demand for electric vehicles (EVs) increases, verification tests for the performance aspect of secondary batteries are becoming more important, and the importance of cell level tests that verify and diagnose the test results at the battery module and the battery pack level (module/pack level) in advance is also increasing.

Life time estimation that is one of the most important performance indicators of electric vehicles (EVs) is an important indicator that is capable of determining how long the performance of the battery pack level is maintained in good hardware performance.

If it is possible to design a realistic situational test for the battery module or battery pack in advance at the cell level, which is the smallest unit of the battery pack, it may be a good alternative that not only minimizes test costs but also shortens the test period, thereby providing more objective data to automobile OEMs and increasing reliability. Thus, the question has been whether it is possible to devise realistic, situational tests for the battery modules or battery packs in advance at this cell level.

### DISCLOSURE OF THE INVENTION

### TECHNICAL PROBLEM

The present invention has been made to solve the above problems, and the object of the present invention is to provide a cell test jig, which is capable of simulating an environment that is identical or similar to that in a battery module or a battery pack, so that even when testing one cell, results that are identical or similar to those obtained by testing the battery module or the battery pack may be obtained.

### TECHNICAL SOLUTION

A cell test jig used for testing a cell according to the present invention includes a first plate configured to cover one surface of the cell, a second plate configured to cover the other surface that is a surface opposite to the one surface of the cell, a heating pad disposed between the first plate and the second plate and disposed adjacent to one surface of the cell, which is configured to connect the one side surface and the other surface of the cell to each other, and a cooling plate disposed between the first plate and the second plate and disposed adjacent to the other side surface of the cell, which is a surface opposite to the one side surface of the cell.

The heating pad may be configured to generate heat, thereby heating the cell, and a cooling fluid may flow inside the cooling plate to cool the cell.

Each of the first plate and the second plate may be provided as a bake-lite plate.

The heating pad may be disposed to face a folded sealing part of the cell.

The other side surface of the cell may have the form of a connection surface configured to the one surface and the other surface of the cell to each other.

The cell test jig may further include a back plate configured to support the heating pad at a surface opposite to the surface of the heating pad, which faces the cell.

The back plate may be installed to be fixed to the first plate and the second plate.

A temperature sensor part configured to measure a temperature of the cell may be installed on at least one of the first plate or the second plate.

The cell test jig may further include a surface pressure sensor part configured to measure a pressure at which an outer surface of the cell is expanded.

The surface pressure sensor part may include a first surface pressure sensor part disposed on at least one or more of between one surface of the cell and the first plate or between the other surface of the cell and the second plate.

The first surface pressure sensor part may include: a first base plate; and a plurality of first surface pressure sensors attached to the first base plate, wherein the plurality of first surface pressure sensors may be arranged in plurality of columns and plurality of rows at fixed positions.

The surface pressure sensor part may include a second surface pressure sensor part disposed on at least one or more of between the one side surface of the cell and the heating pad or between the other side surface of the cell and the cooling plate.

The second surface pressure sensor part may include: a second base plate; and a plurality of second surface pressure sensors attached to the second base plate, wherein the plurality of second surface pressure sensors may be arranged in plurality of columns and plurality of rows at fixed positions.

A through-hole through which heat of the heating pad may be smoothly transferred is defined in the second base plate.

The cell test jig may further include a back plate configured to support the heating pad on a surface opposite to the surface of the heating pad, which faces the cell, wherein the second surface pressure sensor part, the heating pad, and the back plate may be sequentially disposed in a direction that is away from the cell.

The cell test jig may further include a coupling unit configured to couple the first plate and the second plate to each other, wherein the coupling unit may include: a bolt passing through a coupling hole that is a through-hole defined in each of the first plate and the second plate; and a nut coupled to the bolt to couple the first plate and the second plate to each other.

A resin may be finished at a joint between any adjacent two parts of the first plate, the second plate, the heating pad, and the cooling plate.

### ADVANTAGEOUS EFFECTS

The cell test jig according to the present invention may simulate the environment that is identical or similar to that in the battery module or the battery pack, so that even when the testing one cell, the results identical or similar to those obtained by testing the battery module or a battery pack may be obtained.

### BRIEF DESCRIPTION OF THE DRAWINGS

FIG. 1 is a perspective view illustrating a cell test jig according to Embodiment 1 of the present invention.
FIG. 2 is a view of a second surface pressure sensor part in a cell test jig according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

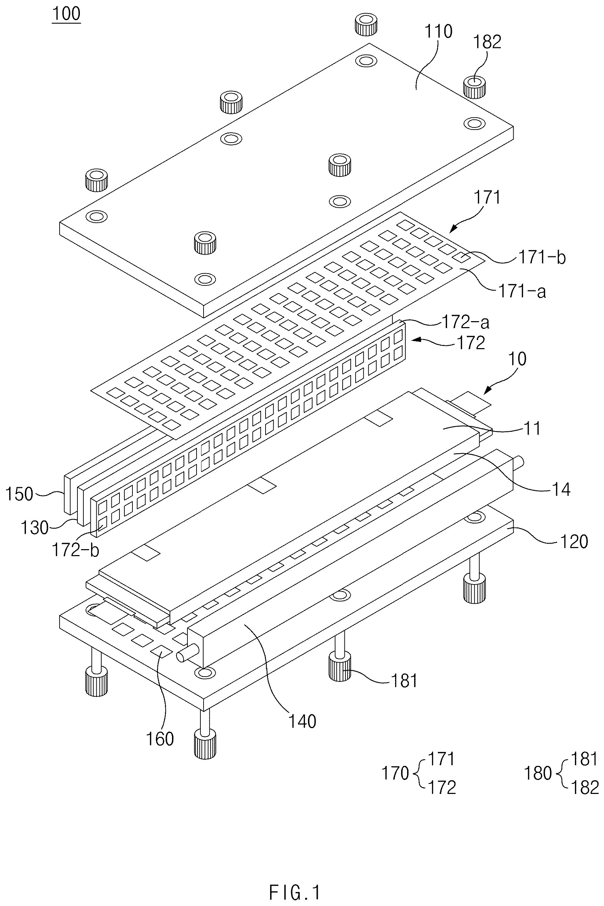

FIG. 1 is a perspective view illustrating a cell test jig 100 according to Embodiment 1 of the present invention.

Hereinafter, the cell test jig 100 according to Embodiment 1 of the present invention will be described with reference to FIG. 1.

The cell test jig 100 according to Embodiment 1 of the present invention may be a cell test jig 100 used to test a cell 10. The cell test jig 100 according to Embodiment 1 of the present invention includes a first plate 110 covering one surface 11 of the cell 10, a second plate 120 covering the other surface, which is an opposite surface of the one surface 11 of the cell 10, a heating pad 130 disposed between the first plate 110 and the second plate 120 and disposed adjacent to the one side surface of the cell 10 connecting the one surface 11 to the other surface of the cell 10, and a cooling plate 140 disposed between the first plate 110 and the second plate 120 and disposed adjacent to the other side surface 14 of the cell 10, which is an opposite surface of the one side surface of the cell 10.

Due to these features, the cell test jig 100 according to Embodiment 1 of the present invention may simulate an environment that is identical or similar to that in a battery module or a battery pack, so that even when testing one cell 10, results that are identical or similar to those of testing the battery module or the battery pack may be obtained. The cell test jig 100 according to Embodiment 1 of the present invention creates a battery module-like environment to enable the results to be obtained from a level of the cell 10 and also has a cost-saving effect.

That is, the battery module may be a structure provided by gathering the plurality of cells 10, and in the cell test jig 100 according to Embodiment 1 of the present invention, since the same environment is implemented as when one cell 10 is in the plurality of cells 10 of the battery module, it is possible to predict what results the cell 10 in the battery module will be derived even with one cell 10.

In the cell test jig 100 according to Embodiment 1 of the present invention, the heating pad 130 may generate heat to heat the cell 10. This allows the heat generated within the battery module to have the same effect on the battery. The cooling plate 140 may have a cooling fluid flowing therein to cool the cell 10. This may have the same effect as having a cooling device within the battery module to cool the cells 10.

Each of the first plate 110 and the second plate 120 may be provided as a bake-lite plate. Since the bake-lite plate has excellent heat resistance and strength, it may act as a heat trap, to enable an environment such as a temperature in the battery module to be simulated. In addition, each of the first plate 110 and the second plate 120 may also function as an insulating material through the bake-lite plate.

A thermal resin may be finished at a joint between any adjacent two parts of the first plate 110, the second plate 120, the heating pad 130, and the cooling plate 140. This allows for more effectively and reliably trapping heat.

In addition, a resin used at a place that is necessary within the cell test jig 100 may be the same resin used when assembling the actual battery module. This allows for implementing tests that are more suited to a real module-like environment. In addition, the resin may be used in a position that produces the same effect as the portion at which the resin is disposed within the actual battery module.

To make the environment identical to that in the battery module, the heating pad 130 may be disposed to face a folded sealing part of the cell 10. Here, the meaning of the folded sealing part may mean a portion provided by sealing an edge of a pouch in the pouch-shaped cell 10 with heat and a pressure and folding the sealed portion twice or three times. Here, the reason for folding the sealing part two or three times is to minimize a volume or width occupied by the cell 10.

In addition, a surface having the folded sealing part may be one side surface of the cell 10. In addition, an opposite side of one side surface of the cell 10 may be the other side surface 14 of the cell 10, and the other side surface 14 of the cell 10 may not be in the form of the folded sealing part. The other side surface 14 of the cell 10 may have the form of a connection surface that continuously connects the one surface 11 of the cell 10, which is a top surface of the cell 10, to the other surface of the cell 10, which is a bottom surface of the cell 10. That is, the surfaces may be connected to each other from the beginning without any sealing.

The cooling plate 140 may be disposed adjacent to and facing the other side surface 14 of the cell 10. That is, the cooling plate 140 may be disposed to face the connection surface that continuously connects one surface 11 to the other side of the cell 10. Since a folded sealing part-side has a folded portion, and the battery and the cooling plate 140 are not in close contact with each other, in the actual battery module, the cooling plate 140 may be installed to be in close contact with a smooth surface-side at which there is no folded sealing part. Therefore, in order to create an environment that is identical to that of the actual battery module, the cooling plate 140 may be installed in close contact with the smooth connection surface in the cell test jig 100. In this case, the heating pad 130 and the cooling plate 140 may be disposed opposite to each other.

A back plate 150 supporting the heating pad 130 may be further included at an opposite surface of a surface of the heating pad 130 on the surface facing the cell 10. The back plate 150 may serve to trap heat and may also serve to maintain the heating pad 130 at a stable position.

In order to enable that the heating pad 130 to remains at the stable position, the back plate 150 needs to stably support the heating pad 130. For this purpose, the back plate 150 may be installed to be fixed to the first plate 110 and the second plate 120. Specifically, the back plate 150 may be installed to be fixed together to the first plate 110 and the second plate 120.

A temperature sensor part 160 for measuring the temperature of the cell 10 may be installed on at least one of the first plate 110 or the second plate 120. The temperature sensor part 160 may be installed in plurality of columns and rows at a set position. As a result, temperature measurement at an accurate position on the entire one surface 11 and the entire other side of the cell 10 may be possible. It is also possible to improve a limitation of the installation of the temperature sensor part 160 in the existing actual battery module.

The cell test jig 100 according to Embodiment 1 of the present invention may further include a surface pressure sensor part for measuring a pressure at which an outer surface of the cell 10 is expanded.

The surface pressure sensor part may further include a first surface pressure sensor 171-b part disposed between at least one of the one surface 11 of the cell 10 and the first plate 110 or between the other surface of the cell 10 and the second plate 120.

The first surface pressure sensor part 171 may include a first base plate 171-a and the first surface pressure sensor 171-b. The first base plate 171-a may have a size and shape corresponding to those of the one surface 11 or the other side of the cell 10 and may have a plate shape. The first surface pressure sensor 171-b may be a surface pressure sensor attached to the first base plate 171-a. The first surface pressure sensor 171-b may be provided in plurality. Particularly, the plurality of first surface pressure sensors 171-b may be arranged in plurality of columns and plurality of rows at fixed positions. As a result, a pressure may be measured at an exact position on the one surface 11 or the other side of the cell 10. It is possible to predict where and at what pressure the cell 10 within the battery module will be swelled or to what extent it will be swelled.

The surface pressure sensor part may further include a second surface pressure sensor 172-b part disposed on at least one of between the one side surface of the cell 10 and the heating pad 130 or between the other side surface 14 of the cell 10 and the cooling plate 140.

When the second surface pressure sensor part 172 is disposed between the one side surface of the cell 10 and the heating pad 130, the second surface pressure sensor part 172 may be installed to face the folded sealing part of the cell 10. In a situation in which heat is applied to the cell 10, if a pressure inside the cell 10 increases, the folded sealing part may burst. In this case, the second surface pressure sensor 172-b may measure a venting pressure or venting position. This may be seen as an implementation of a venting phenomenon occurring in an abnormal situation.

The second surface pressure sensor part 172 may include a second base plate 172-a and the second surface pressure sensor 172-b. The second base plate 172-a may have a size and shape corresponding to those of the one surface 11 or the other side of the cell 10 and may have a plate shape. The second surface pressure sensor 172-b may be a surface pressure sensor attached to the second base plate 172-a. The second surface pressure sensor 172-b may be provided in plurality. Particularly, the plurality of second surface pressure sensors 172-b may be arranged in plurality of columns and plurality of rows at fixed positions. As a result, a pressure may be measured at an exact position on the one surface 11 or the other side of the cell 10. It is possible to predict where and at what pressure the cell 10 within the battery module will be swelled or to what extent it will be swelled.

The first surface pressure sensor 171-b part and the second surface pressure sensor 172-b part may be selectively installed alone, or both the first and second surface pressure sensors 171-b and 172-b part may be installed together. As a result, a degree of the swelling of the actual pouch cell 10 may be clearly confirmed.

The cell test jig 100 according to Embodiment 1 of the present invention may further include a coupling unit 180 that couples the first plate 110 and the second plate 120 to each other. The coupling unit may include a bolt 181 that passes through a coupling hole, which is a through-hole 172-c defined in the first plate 110 and the second plate 120, and a nut 182 that is coupled to the bolt to couple the first plate 110 and the second plate 120 to each other. The bolt and nut may be used together to adjust a spaced distance between the first plate 110 and the second plate 120, and thus adjust coupling force. That is, a pressure applied to the cell 10 from above and below the cell 10 may also be adjusted. In this way, an environment in which top and bottom surfaces are restricted through the bolts and nuts may be created, and thus, an actual module environment may be implemented in terms of the pressure applied to the cell 10. Thus, even if a partial pressure of each cell 10 is measured through the surface pressure sensor part, the same or similar results as in the actual battery module may be obtained.

The cell test jig 100 according to Embodiment 1 of the present invention, which is described above, may perform various tests required for the battery module even when the testing at the level of the cell 10, which is a radical unit. In addition, test conditions may be easily adjusted according to various shapes and dimensions of a sample of the pouch cell 10.

### Embodiment 2

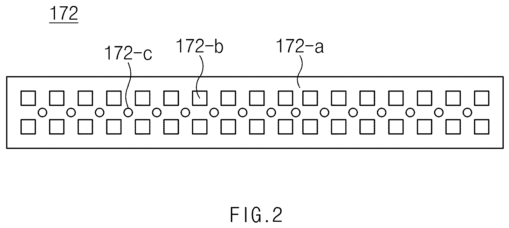

FIG. 2 is a view of a second surface pressure sensor part 172 in a cell test jig 100 according to Embodiment 2 of the present invention.

Embodiment 2 of the present invention is different from Embodiment 1 in that a shape of a second surface pressure sensor part 172 is different from that of the cell test jig 100 according to Embodiment 1 of the present invention.

Contents in common with Embodiment 1 will be omitted as much as possible, and Embodiment 2 will be described. That is, it is obvious that if content that is not described in Embodiment 2 is needed, it may be regarded as the content of Embodiment 1.

Referring first to FIG. 1, even in the cell test jig 100 according to Embodiment 2 of the present invention, a back plate 150 supporting a heating pad 130 may be installed. In this case, the second surface pressure sensor part 172, the heating pad 130, and the back plate 150 may be sequentially arranged in a direction that is away from the cell 10.

In this case, heat generated from the heating pad 130 is transferred to the cell 10 through the second surface pressure sensor part 172. Thus, it is desirable that the second surface pressure sensor part 172 include a structure that allows the heat to pass therethrough well.

That is, the second surface pressure sensor part 172 may include a second base plate 172-a and a second surface pressure sensor 172-b. Here, the second base plate 172-a may be provided with a through-hole 172-c to ensure smooth heat transfer from the heating pad 130. In FIG. 2, the through-hole 172-c is shown to be defined in the second base plate 172-a. The through-holes 172-c may be provided in plurality and may be defined between the second surface pressure sensor part 172 and the second surface pressure sensor part 172.

In addition, FIG. 2 illustrates that the second surface pressure sensors 172-b are provided in two rows in a longitudinal direction of the second base plate 172-a, and that the through-hole 172-c is defined in one row at a height between the two rows of the second surface pressure sensors 172-b in the longitudinal direction of the same second base plate 172-a.

In addition to this case, if a heat transfer rate is to further increase, the through-holes 172-c may be defined in a total of three rows, i.e., one row at a height higher than the two rows of the surface pressure sensors, one row at a height between the rows of the second surface pressure sensors 172-b, and one row at a height lower than the row of the second surface pressure sensors 172-b.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 10:: Cell
- 11:: One surface of cell
- 14:: The other side surface of cell
- 100:: Cell test jig
- 110:: First plate
- 120:: Second plate
- 130:: Heating pad
- 140:: Cooling plate
- 150:: Back plate
- 160:: Temperature sensor part
- 170:: Surface pressure sensor part
- 171:: First surface pressure sensor part
- 171-a:: First base plate
- 171-b:: First surface pressure sensor
- 172:: Second surface pressure sensor part
- 172-a:: Second base plate
- 172-b:: Second surface pressure sensor
- 172-c:: Through-hole
- 180:: Coupling unit
- 181:: Bolt
- 182:: Nut

## Claims

1. A cell test jig used for testing a cell, comprising:
a first plate configured to cover one surface of the cell;
a second plate configured to cover the other surface that is a surface opposite to the one surface of the cell;
a heating pad disposed between the first plate and the second plate and disposed adjacent to one side surface of the cell, which is configured to connect the one surface and the other surface of the cell to each other; and
a cooling plate disposed between the first plate and the second plate and disposed adjacent to the other side surface of the cell, which is a surface opposite to the one side surface of the cell.

2. The cell test jig of claim 1, wherein the heating pad is configured to generate heat, thereby heating the cell, and
a cooling fluid flows inside the cooling plate to cool the cell.

3. The cell test jig of claim 1, wherein each of the first plate and the second plate is provided as a bake-lite plate.

4. The cell test jig of claim 2, wherein the heating pad is disposed to face a folded sealing part of the cell.

5. The cell test jig of claim 2, wherein the other side surface of the cell has the form of a connection surface configured to continuously connect the one surface and the other surface of the cell to each other.

6. The cell test jig of claim 1, further comprising a back plate configured to support the heating pad at a surface opposite to the surface of the heating pad, which faces the cell.

7. The cell test jig of claim 6, wherein the back plate is installed to be fixed to the first plate and the second plate.

8. The cell test jig of claim 1, wherein a temperature sensor part configured to measure a temperature of the cell is installed on at least one of the first plate or the second plate.

9. The cell test jig of claim 1, further comprising a surface pressure sensor part configured to measure a pressure at which an outer surface of the cell is expanded.

10. The cell test jig of claim 9, wherein the surface pressure sensor part comprises a first surface pressure sensor part disposed on at least one or more of between one surface of the cell and the first plate or between the other surface of the cell and the second plate.

11. The cell test jig of claim 10, wherein the first surface pressure sensor part comprises:
a first base plate; and
a plurality of first surface pressure sensors attached to the first base plate,
wherein the plurality of first surface pressure sensors are arranged in plurality of columns and plurality of rows at fixed positions.

12. The cell test jig of claim 9, wherein the surface pressure sensor part comprises a second surface pressure sensor part disposed on at least one or more of between the one side surface of the cell and the heating pad or between the other side surface of the cell and the cooling plate.

13. The cell test jig of claim 12, wherein the second surface pressure sensor part comprises:
a second base plate; and
a plurality of second surface pressure sensors attached to the second base plate,
wherein the plurality of second surface pressure sensors are arranged in plurality of columns and plurality of rows at fixed positions.

14. The cell test jig of claim 12, wherein a through-hole through which heat of the heating pad is smoothly transferred is defined in the second base plate.

15. The cell test jig of claim 12, further comprising a back plate configured to support the heating pad on a surface opposite to the surface of the heating pad, which faces the cell,
wherein the second surface pressure sensor part, the heating pad, and the back plate are sequentially disposed in a direction that is away from the cell.

16. The cell test jig of claim 1, further comprising a coupling unit configured to couple the first plate and the second plate to each other,
wherein the coupling unit comprises:
a bolt passing through a coupling hole that is a through-hole defined in each of the first plate and the second plate; and
a nut coupled to the bolt to couple the first plate and the second plate to each other.

17. The cell test jig of claim 1, wherein a resin is finished at a joint between any adjacent two parts of the first plate, the second plate, the heating pad, and the cooling plate.
